# EUROPÄISCHE PATENTSCHRIFT

(11) **EP 1 761 423 B1**
(45) Veröffentlichungstag und Bekanntmachung des Hinweises auf die Patenterteilung: **03.10.2018**
(21) Anmeldenummer: 05749141.7
(22) Anmeldetag: 10.05.2005
(51) Int. Cl.: B60T 8/32, B60T 8/86, B60T 8/24, B60T 7/12

(54) **RÜCKROLLBEGRENZUNG FÜR EIN KRAFTFAHRZEUG**
ROLL-BACK STOP FOR A MOTOR VEHICLE
DISPOSITIF LIMITANT LE ROULAGE VERS L'ARRIERE D'UN VEHICULE A MOTEUR

(30) Priorität: 25.06.2004 DE 102004030795
(43) Veröffentlichungstag der Anmeldung: 14.03.2007
(73) Patentinhaber: ROBERT BOSCH GMBH, 70442 Stuttgart (DE)
(72) Erfinder: MALLOL TORRALBO, Antonio, 71640 Ludwigsburg (DE); BACHMANN, Michael, 71287 Weissach (DE)
(86) Internationale Anmeldenummer: PCT/EP2005/052094
(87) Internationale Veröffentlichungsnummer: WO 2006/000497

(56) Entgegenhaltungen:
- DE-A1- 19 925 368
- US-A- 5 366 053
- US-A1- 2003 119 628
- US-B1- 6 183 048

## Beschreibung

### Stand der Technik

Die Erfindung betrifft ein Verfahren zur Rückrollbegrenzung eines Kraftfahrzeugs.

Aus der DE 199 25 368 A1 sind ein Verfahren und eine Vorrichtung zur Steuerung eines Fahrzeugs bekannt, bei welchem eine Geschwindigkeitsregelung nur bei erkannter Bergabfahrt durchgeführt wird. Eine Bergabfahrtserkennung arbeitet auf der Basis der Istbeschleunigung des Fahrzeugs und einer berechneten Modellbeschleunigung des Fahrzeugs, wobei die Bergabfahrt erkannt wird, wenn die Änderung der Istbeschleunigung und die Abweichung zwischen Istbeschleunigung und Modellbeschleunigung positiv ist.

Aus der US 2003/0119628 A1 sind ein Verfahren und eine Vorrichtung zum selbsttätigen Betätigen einer Fahrzeugbremse bekannt. Dabei wird eine mit Fremdkraft betätigte Kupplung derart betätigt, dass die Drehmomentübertragung zwischen einem Antriebsmotor und wenigstens einem Fahrzeugrad nicht vollständig unterbricht. Es wird festgestellt, ob die Fahrzeuggeschwindigkeit bei laufendem Antriebsmotor bei einer eingelegten Vorwärtsfahrstufe eines Getriebes Null ist oder das Fahrzeug rückwärts rollt. Ist dies der Fall so wird eine Fahrzeugbremse mit Fremdkraft betätigt und die Drehmomentübertragung zwischen dem Antriebsmotor und einem Fahrzeugrad vollständig unterbrochen.

Die Merkmale der Oberbegriffe der unabhängigen Ansprüche sind der US 2003/0119628 A1 entnommen.

### Vorteile der Erfindung

Die Erfindung betrifft ein Verfahren zur Rückrollbegrenzung eines Kraftfahrzeugs, bei dem
- die der eingelegten Gangstufe bzw. Getriebestufe zugehörige Antriebsrichtung des Fahrzeugs ermittelt wird,
- die Bewegungsrichtung des Fahrzeugs ermittelt wird und
- für den Fall, dass die Bewegungsrichtung entgegengesetzt der Antriebsrichtung ist, ein fahrerunabhängiger Bremseingriff an den Rädern wenigstens einer Achse erfolgt.

Damit ist es möglich, das Ausmaß nicht vom Fahrer gewollter Fahrzeugbewegungen durch Bremseingriffe zu begrenzen.

Dabei erfolgt der Bremseingriff derart, dass der Betrag der Fahrzeuggeschwindigkeit eine vorgegebene, von Null verschiedene Fahrzeuglängsgeschwindigkeit in Bewegungsrichtung nicht überschreitet.

Eine vorteilhafte Ausgestaltung der Erfindung ist dadurch gekennzeichnet, dass der Bremseingriff derart erfolgt, dass der Betrag der Fahrzeuggeschwindigkeit auf die vorgegebene Fahrzeuglängsgeschwindigkeit eingeregelt wird.

Eine vorteilhafte Ausgestaltung der Erfindung ist dadurch gekennzeichnet, dass die Einstellung der konstanten Fahrzeuglängsgeschwindigkeit im Rahmen einer HDC-Regelung erfolgt. Damit kann auf eine im Fahrzeug möglicherweise bereits vorhandene HDC-Funktionalität zurückgegriffen werden (HDC = "Hill Descent Control").

Eine vorteilhafte Ausgestaltung der Erfindung ist dadurch gekennzeichnet, dass das Verfahren in Abhängigkeit von der Fahrpedalstellung durchgeführt wird.

Eine vorteilhafte Ausgestaltung der Erfindung ist dadurch gekennzeichnet, dass das Verfahren bei betätigtem Fahrpedal durchgeführt wird. Es ist auch möglich, dass das Verfahren nur bei betätigtem Fahrpedal durchgeführt wird.
Durch die beiden letztgenannten Ausgestaltungen wird sichergestellt, dass das Verfahren nur bei einem Anfahrwunsch des Fahrers durchgeführt wird.

Eine vorteilhafte Ausgestaltung der Erfindung ist dadurch gekennzeichnet, dass Verfahren in Abhängigkeit von der Stellung des Kupplungspedals durchgeführt wird. Es ist auch möglich, dass das Verfahren nur bei betätigtem Kupplungspedal durchgeführt wird.

Eine vorteilhafte Ausgestaltung der Erfindung ist dadurch gekennzeichnet, dass das Verfahren bei ganz oder teilweise betätigtem Kupplungspedal durchgeführt wird.

Bei einem nicht betätigtem Kupplungspedal führt eine Fahrzeugbewegung entgegen der Gangrichtung zu einem Abwürgen des Motors.

Weiter betrifft die Erfindung eine Vorrichtung zur Rückrollbegrenzung eines Kraftfahrzeugs, nach Anspruch 8.

Eine vorteilhafte Ausgestaltung der Erfindung ist dadurch gekennzeichnet, dass es sich bei den Bewegungsrichtungsermittlungsmitteln um Raddrehzahlsensoren handelt.

Die vorteilhaften Ausgestaltungen des erfindungsgemäßen Verfahrens äußern sich selbstverständlich auch als vorteilhafte Ausgestaltungen der erfindungsgemäßen Vorrichtung und umgekehrt.

### Zeichnung

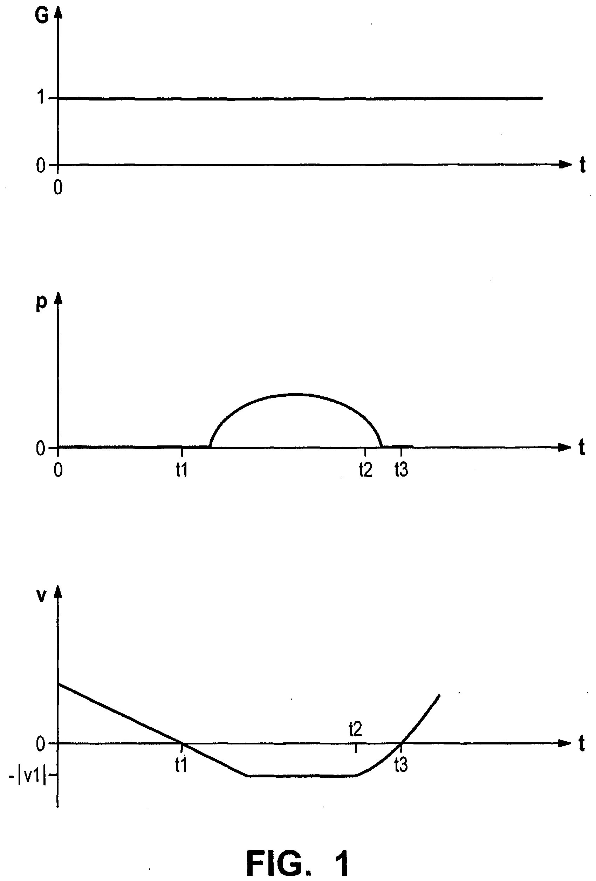

Die Zeichnung besteht aus Figur 1.

Figur 1 zeigt den zeitlichen Verlauf verschiedener Fahrzeuggrößen.

### Ausführungsbeispiele

An einer starken Steigung bzw. Fahrbahnlängsneigung erschwert das Zurückrollen das Fahrzeugs das Anfahren in die gewünschte Richtung. Das erfindungsgemäße System hilft dem Fahrer in solchen Situationen, einen übermäßigen Verschleiß der Kupplung und das Abwürgen des Motors zu vermeiden. Dazu wird die beispielsweise von einem Gangsensor oder einer Getriebestufe (bei einem automatischen Schaltgetriebe) gelieferte Information mit einem aktiven Bremsdruckaufbausystem kombiniert. Ein Bremseneingriff des Fahrers ist nicht erforderlich. Der Fahrer betätigt einzig das Fahrpedal und wenigstens teilweise das Kupplungspedal. Außer dem Gangsensor bzw. der Information über die Getriebestufe werden keine zusätzlichen Sensoren benötigt.

Wenn bei der Bergab- oder Bergauffahrt eines Fahrzeugs die Antriebsrichtung aufgrund des eingelegten Gangs und die Bewegungsrichtung des Fahrzeugs nicht übereinstimmen, wird angenommen, dass der Fahrer in die Gegenrichtung, d.h. in die Richtung des eingelegten Gangs, fahren möchte. In diesem Fall wird erfindungsgemäß Bremsdruck aufgebaut, so dass die Fahrzeuggeschwindigkeit während des Rollens in die dem Fahrerwunsch entgegengesetzte Richtung auf einen niedrigen Wert begrenzt wird.

Die Erfindung erfasst die Signale des Gangsensors und erzeugt daraufhin einen aktiven Bremsdruckaufbau, falls die Fahrzeugbewegungsrichtung nicht mit der Gangrichtung übereinstimmt. Der Druck wird dabei so aufgebaut, dass das Fahrzeug eine vorgebbare niedrige Geschwindigkeit nicht überschreitet. Dazu kann auch eine Geschwindigkeitsregelung beispielsweise im Rahmen einer HDC-Regelung (HDC = "Hill Descent Control") eingesetzt werden, welche den Bremsdruck so regelt, dass sich eine niedrige konstante Fahrzeuglängsgeschwindigkeit einstellt. In Versuchen hat sich ein Wert von 1 m/s als geeignet herausgestellt.

In Fig. 1 ist der zeitliche Verlauf verschiedener Fahrzeuggrößen als Funktion der Zeit dargestellt. Dazu ist in Abszissenrichtung jeweils die Zeit t aufgetragen, in Ordinatenrichtung ist
- im obersten Diagramm die eingelegte Gangstufe G (im Diagramm ist G = 1, d.h. der erste Gang ist eingelegt),
- im mittleren Diagramm der Bremsdruck p, welcher an allen Rädern oder den Rädern nur einer Achse angelegt werden kann und
- im unteren Diagramm die Fahrzeuglängsgeschwindigkeit v aufgetragen.

In Fig. 1 wird der Fall betrachtet, dass bei einer bergaufwärts gerichteten Fahrzeugbewegung mit eingelegtem erstem Gang der Fahrer zum Zeitpunkt t = 0 das Kupplungspedal betätigt.
Als Folge davon wird der Antriebsstrang von den Antriebsrädern abgekoppelt und es wird kein Antriebsmoment mehr an die Räder übertragen. Als Folge davon verliert das Fahrzeug an Geschwindigkeit, erreicht zum Zeitpunkt t1 die Geschwindigkeit Null und beginnt danach rückwärts bergab zu rollen. Dies ist im untersten Diagramm von Fig. 1 gut zu sehen. Kurz nach Beginn der Rückwärtsbewegung findet ein Bremsdruckaufbau p statt. Der Bremsdruck wird dabei so eingestellt, dass der Betrag der Fahrzeuglängsgeschwindigkeit einen Wert |v1| nicht überschreitet. Wird der rückwärtigen Fahrzeugbewegung wie in Fig. 1 ein negatives Vorzeichen zugeordnet, dann ist v größer oder gleich -|v1|.
Zum Zeitpunkt t2 lässt der Fahrer das Kupplungspedal ganz oder teilweise wieder los. Als Folge davon wird wieder Motormoment an die Räder übertragen, die Geschwindigkeit beginnt wieder zu steigen, erreicht bei t = t3 den Wert 0 und wird dann wieder positiv.

Bremsdruck p kann dabei entweder nur an den Rädern einer Achse oder an allen Fahrzeugrädern eingestellt werden. Weiter ist es möglich, die Vorderräder und Hinterräder mit unterschiedlichen Bremsdrücken zu beaufschlagen.

Der Ablauf des erfindungsgemäßen Verfahrens kann folgendermaßen ablauten. Nach dem Start wird
- die der eingelegten Gangstufe bzw. Getriebestufe zugehörige Antriebsrichtung des Fahrzeugs ermittelt und
- die Bewegungsrichtung des Fahrzeugs ermittelt.
Anschließend wird abgefragt, ob die Bewegungsrichtung und die Antriebsrichtung übereinstimmen. Lautet die Antwort ja, dann wird zum start zurückverzweigt. Lautet die Antwort nein, dann ist die Bewegungsrichtung entgegengesetzt der Antriebsrichtung. In diesem Fall erfolgen derartige fahrerunabhängige Bremseingriffe an den Rädern wenigstens einer Achse, dass die Fahrzeuggeschwindigkeit auf einen vorgegebenen kleinen Wert eingeregelt wird.

Der Aufbau der Vorrichtung zur Rückrollbegenzung eines Kraftfahrzeugs kann folgendermaßen aussehen. Die Vorrichtung enthält
- Antriebsrichtungsennittlungsmittel zur Ermittlung der der eingelegten Gangstufe bzw. Getriebestufe zugehörigen Antriebsrichtung sowie
- Bewegungsrichtungsermittlungsmittel zur Ermittlung der Bewegungsrichtung des Fahrzeugs.
Die Ausgangssignale dieser Blöcke werden Vergleichsmitteln zum Vergleich der Antriebsrichtung und der Bewegungsrichtung zugeführt. Diese steuern für den Fall, dass die Bewegungsrichtung entgegengesetzt der Antriebsrichtung ist, Bremsmittel derart an, dass ein fahrerunabhängiger Bremseingriff an den Rädern wenigstens einer Achse erfolgt.

## Patentansprüche

1. Verfahren zur Rückrollbegrenzung eines Kraftfahrzeugs, bei dem
- die der eingelegten Gangstufe bzw. Getriebestufe zugehörige Antriebsrichtung des Fahrzeugs ermittelt wird (201),
- die Bewegungsrichtung des Fahrzeugs ermittelt wird (202) und
- für den Fall, dass die Bewegungsrichtung entgegengesetzt der Antriebsrichtung ist, ein fahrerunabhängiger Bremseingriff an den Rädern wenigstens einer Achse erfolgt (204)
**dadurch gekennzeichnet,**
- **dass** der Bremseingriff (p) derart erfolgt, dass der Betrag der Fahrzeuggeschwindigkeit (v) eine vorgegebene, von Null verschiedene Fahrzeuglängsgeschwindigkeit (v1) in Bewegungsrichtung nicht überschreitet.

2. Verfahren nach Anspruch 1, **dadurch gekennzeichnet, dass** der Bremseingriff (p) derart erfolgt, dass der Betrag der Fahrzeuggeschwindigkeit (v) auf die vorgegebene Fahrzeuglängsgeschwindigkeit (v1) eingeregelt wird.

3. Verfahren nach Anspruch 2, **dadurch gekennzeichnet, dass** die Einstellung der konstanten Fahrzeuglängsgeschwindigkeit (v1) im Rahmen einer HDC-Regelung erfolgt.

4. Verfahren nach Anspruch 1, **dadurch gekennzeichnet, dass** das Verfahren in Abhängigkeit von der Fahrpedalstellung durchgeführt wird.

5. Verfahren nach Anspruch 4, **dadurch gekennzeichnet, dass** das Verfahren bei betätigtem Fahrpedal durchgeführt wird.

6. Verfahren nach Anspruch 1, **dadurch gekennzeichnet, dass** Verfahren in Abhängigkeit von der Stellung des Kupplungspedals durchgeführt wird.

7. Verfahren nach Anspruch 6, **dadurch gekennzeichnet, dass** das Verfahren bei ganz oder teilweise betätigtem Kupplungspedal durchgeführt wird.

8. Vorrichtung zur Rückrollbegrenzung eines Kraftfahrzeugs, enthaltend
- Antriebsrichtungsermittlungsmittel (300) zur Ermittlung der der eingelegten Gangstufe bzw. Getriebestufe zugehörigen Antriebsrichtung,
- Bewegungsrichtungsermittlungsmittel (301) zur Ermittlung der Bewegungsrichtung des Fahrzeugs,
- Vergleichsmittel (302) zum Vergleich der Antriebsrichtung und der Bewegungsrichtung sowie
- Bremsmittel (303), durch welche für den Fall, dass die Bewegungsrichtung entgegengesetzt der Antriebsrichtung ist, ein fahrerunabhängiger Bremseingriff an den Rädern wenigstens einer Achse erfolgt.
**dadurch gekennzeichnet,**
- **dass** der Bremseingriff (p) derart erfolgt, dass der Betrag der Fahrzeuggeschwindigkeit (v) eine vorgegebene, von Null verschiedene Fahrzeuglängsgeschwindigkeit (v1) in Bewegungsrichtung nicht überschreitet.

9. Vorrichtung nach Anspruch 8, **dadurch gekennzeichnet, dass** es sich bei den Bewegungsrichtungsermittlungsmitteln um Raddrehzahlsensoren handelt.

## Claims

1. Method for limiting rollback of a motor vehicle, in which
- the drive direction of the vehicle which is associated with the engaged gear or transmission stage is determined (201),
- the direction of movement of the vehicle is determined (202) and
- in the event of the direction of movement being opposed to the drive direction, a braking intervention which is independent of the driver is carried out at the wheels of at least one axle (204)
**characterized**
- **in that** the braking intervention (p) takes place in such a way that the absolute value of the vehicle speed (v) does not exceed a predefined vehicle longitudinal speed (v1), which is different from zero, in the direction of movement.

2. Method according to Claim 1, **characterized in that** the braking intervention (p) is carried out in such a way that the absolute value of the vehicle speed (v) is adjusted to the predefined vehicle longitudinal speed (v1).

3. Method according to Claim 2, **characterized in that** the constant vehicle longitudinal speed (v1) is set within the scope of an HDC regulating process.

4. Method according to Claim 1, **characterized in that** the method is carried out as a function of the position of the accelerator pedal.

5. Method according to Claim 4, **characterized in that** the method is carried out when the accelerator pedal is activated.

6. Method according to Claim 1, **characterized in that** the method is carried out as a function of the position of the clutch pedal.

7. Method according to Claim 6, **characterized in that** the method is carried out when the clutch pedal is entirely or partially activated.

8. Device for limiting rollback of a motor vehicle, containing
- drive direction-determining means (300) for determining the drive direction which is associated with the engaged gear or transmission stage,
- direction of movement-determining means (301) for determining the direction of movement of the vehicle,
- comparing means (302) for comparing the drive direction and the direction of movement and
- braking means (303) by means of which a driver-independent braking intervention is carried out at the wheels of at least one axle in the event of the direction of movement being opposed to the drive direction,
**characterized**
- **in that** the braking intervention (p) is carried out in such a way that the absolute value of the vehicle speed (v) does not exceed a predefined vehicle longitudinal speed (v1), which is different from zero, in the direction of movement.

9. Device according to Claim 8, **characterized in that** the direction of movement-determining means are wheel rotational speed sensors.

## Revendications

1. Procédé de limitation du recul d'un véhicule automobile, selon lequel
- la direction de propulsion du véhicule associée au rapport de transmission ou au rapport de boîte engagé est déterminée (201),
- la direction de déplacement du véhicule est déterminée (202) et
- dans le cas où la direction de déplacement est l'inverse de la direction de propulsion, une intervention de freinage indépendante du conducteur est effectuée au niveau des roues d'au moins un essieu (204)
**caractérisé en ce**
- **que** l'intervention de freinage (p) est effectuée de telle sorte que la valeur de la vitesse du véhicule (v) ne dépasse pas une vitesse longitudinale de véhicule (vl) prédéfinie, différente de zéro, dans la direction de déplacement.

2. Procédé selon la revendication 1, **caractérisé en ce que** l'intervention de freinage (p) est effectuée de telle sorte que la valeur de la vitesse du véhicule (v) est asservie à la vitesse longitudinale de véhicule (vl).

3. Procédé selon la revendication 2, **caractérisé en ce que** le réglage de la vitesse longitudinale de véhicule (vl) constante est effectué dans le cadre d'une régulation HDC.

4. Procédé selon la revendication 1, **caractérisé en ce que** le procédé est mis en oeuvre en fonction de la position de la pédale d'accélérateur.

5. Procédé selon la revendication 4, **caractérisé en ce que** le procédé est mis en oeuvre lorsque la pédale d'accélérateur est actionnée.

6. Procédé selon la revendication 1, **caractérisé en ce que** le procédé est mis en oeuvre en fonction de la position de la pédale d'embrayage.

7. Procédé selon la revendication 6, **caractérisé en ce que** le procédé est mis en oeuvre lorsque la pédale d'embrayage est entièrement ou partiellement actionnée.

8. Arrangement de limitation du recul d'un véhicule automobile, comprenant
- des moyens de détermination de la direction de propulsion (300) destinés à déterminer la direction de propulsion associée au rapport de transmission ou au rapport de boîte engagé,
- des moyens de détermination de la direction de déplacement (301) destinés à déterminer la direction de déplacement du véhicule,
- des moyens de comparaison (302) destinés à comparer la direction de propulsion et la direction de déplacement et
- des moyens de freinage (303) par lesquels, dans le cas où la direction de déplacement est l'inverse de la direction de propulsion, une intervention de freinage indépendante du conducteur est effectuée au niveau des roues d'au moins un essieu,
**caractérisé en ce**
- **que** l'intervention de freinage (p) est effectuée de telle sorte que la valeur de la vitesse du véhicule (v) ne dépasse pas une vitesse longitudinale de véhicule (vl) prédéfinie, différente de zéro, dans la direction de déplacement.

9. Arrangement selon la revendication 8, **caractérisé en ce que** les moyens de détermination de la direction de déplacement sont des capteurs de vitesse de rotation de roue.
